# EUROPÄISCHE PATENTSCHRIFT

(11) **EP 1 071 988 B1**
(45) Veröffentlichungstag und Bekanntmachung des Hinweises auf die Patenterteilung: **19.06.2002**
(21) Anmeldenummer: 99916782.8
(22) Anmeldetag: 09.03.1999
(51) Int. Cl.: G05G 1/14

(54) **AUSHÄNGBARE PEDALLAGERUNG**
SUSPENDED PEDAL SUPPORT
SUPPORT POUR PEDALES SUSPENDUES

(30) Priorität: 21.04.1998 DE 19817710
(43) Veröffentlichungstag der Anmeldung: 31.01.2001
(73) Patentinhaber: ED. Scharwächter GmbH, 42855 Remscheid (DE)
(72) Erfinder: BORCHERS, Wolf-Dieter, D-42857 Remscheid (DE)
(74) Vertreter: Sparing, Rolf Klaus
(86) Internationale Anmeldenummer: DE9900681
(87) Internationale Veröffentlichungsnummer: WO9954799

(56) Entgegenhaltungen:
- DE-A- 4 112 132
- GB-A- 1 452 822
- US-A- 4 060 144

## Beschreibung

Die Erfindung bezieht sich auf eine aushängbare Pedallagerung nach dem Oberbegriff des Anspruchs 1.

Bei bekannten Pedallagerungen dieser Bauart ist jeweils das eine Pedal auf der Lagerwelle des anderen Pedals gelagert, wodurch es bei Verwendung einfacher Gleitlager für die Lagerung der Pedalwellen sowohl aneinander als auch in den Lagerarmen des Lagerbocks insbesondere nach einiger Betriebszeit und zunehmender Verschmutzung oder dergl. der Lagerflächen vorkommen kann, daß sich die Pedale gegenseitig beeinflussen, dahingehend, daß die Betätigung des einen Pedales zu einem Mitnahmeeffekt bezüglich des anderen Pedals führt und somit beispielsweise eine Betätigung des auf der Lagerwelle des Bremspedals gelagerten Kupplungspedals eine, wenn auch geringfügige Verstellung des Bremspedals bewirkt. Da derartige Mitnahmeeffekte im Interesse einer auch über eine lange Betriebszeit und auch unter ungünstigen Umständen gleichbleibend einwandfreien Bedienbarkeit der Steuerungsorgane des Fahrzeugs selbstverständlich ausgeschlossen werden müssen, ist man dazu übergegangen, die einzelnen Pedale bzw. die diesen zugeordneten Wellenabschnitte sowohl aneinander als auch in den Lagerarmen eines Lagerbockes unter Einsatz von Wälzlagern zu lagern. Diese Maßnahme führt zwar zu dem gewünschten Erfolg einer voneinander absolut unabhängigen und leichtgängigen Betätigbarkeit der Pedale, ist aber auf der anderen Seite mit dem Nachteil einer erheblichen Erhöhung des Herstellungsaufwandes für die Pedalerie verbunden, zumal der Einsatz von Wälzlagern, insbesondere Nadellagern die Einhaltung von in der Serie nur schwer zu garantierenden Toleranzen erfordert.

US 4,060,144 offenbart eine Pedalhalterung für ein Brems- und Beschleunigungspedal, dadurch gekennzeichnet, daß ein mit dem einen Pedal verbundenes inneres Lagerrohr an zwei Lagerarmen drehbar gelagert ist, und daß ein äußeres, mit dem anderen Pedal verbundenes Lagerrohr das innere Lagerrohr im Bereich zwischen den Lagerarmen umschließt und um das innere Lagerrohr dadurch drehbar gelagert ist, daß die Lager für das äußere Rohr auf dem inneren Rohr gehaltert sind.

DE-A-41 12 132 beschreibt ein Hebelwerk, insbesondere Fußhebelwerk für Kraftfahrzeuge, mit einem um eine ortsfeste Achse schwenkbaren Fußhebel, dessen starr mit ihm verbundener Lagerbolzen in Kunststofflagerbuchsen zweier beabstandeter stegartiger Lagerwangen eines ortsfesten Lagerbocks gelagert ist. Dabei ist mindestens in der einen Lagerwange zur Aufnahme der Lagerbuchse eine im wesentlichen kreisrunde Ausnehmung mit einer nach außen führenden Maulöffnung vorgesehen deren Maulweite geringer ist als der Durchmesser der Ausnehmung selbst. Die zugehörige Lagerbuchse weist ihrerseits auf ihrem ansonsten kreisrunden Außenumfang vorzugsweise zwei einander diametral gegenüberliegende und zur Lagerbuchsenachse parallele ebene Flächen auf, deren gegenseitiger Abstand zumindest etwas kleiner ist als die Maulweite der Maulöffnung.

Der Erfindung liegt die Aufgabe zugrunde, eine aushängbare, vor allem auch für Rechtslenkerfahrzeuge geeignete Pedallagerung der eingangs bezeichneten Bauart für um zueinander konzentrische Achsen gelagerte Pedale dahingehend zu verbessern, daß sie auf der einen Seite unter Verzicht auf die Einhaltung extrem enger Toleranzen leicht montier-und demontierbar ist, und auf der anderen Seite zugleich eine gegenseitige Beeinflussung bzw, unbeabsichtigte Mitnahme des jeweils nicht betätigten Pedals durch das jeweils gerade betätigte Pedal auch ohne den Einsatz von Wälzlagerungen vermieden ist.

Diese Aufgabe wird erfindungsgemäß durch eine Pedallagerung mit den Merkmalen des Anspruchs 1 gelöst. Der Umstand, daß bei der erfindungsgemäßen Ausbildung der Lagerung für die beiden Pedale einer Pedalerie jedes der beiden Pedale um eine eigene Achse schwenkbar und in eigenen, drehsicher im jeweiligen Lagerauge des Lagerbocks festgelegten Lagern aufgenommen ist, ermöglicht es auch bei Einsatz von Gleitlagern, eine gegenseitige Beeinflussung der Pedale beim Betätigen jeweils eines Pedales auszuschließen. Darüber hinaus eröffnet die erfindungsgemäß ineinandergeschachtelte Anordnung der voneinander unabhängigen Schwenkachsen auch den Einsatz einteilig ausgebildeter Lagerschalen für die Lagerung beider Pedale, so daß der für die Lagerung erforderlicher Aufwand gering gehalten werden kann. Schließlich ergibt sich hinsichtlich der Montace bzw. Demontage der Pecalerie ein besonderer Vorteil aus der erfindungsgemäßen Ausbildung der Lagerung für wenigstens eines der Pedale als Stecklagerung, insbesondere dahingehend, daß dieses Pedal ohne Zuhilfenahme von Werkzeugen montier- und demontierbar ist.

In einer bevorzugten Verwirklichungsform der Erfindung ist weiterhin vorgesehen, daß das Bremspedal zweiteilig ausgebildet ist, wobei eine erste, das Pedal tragende Hälfte des Bremspedals drehsicher mit einem ersten Lagerkörper und eine zweite, den Betätigungshebel für das Einrücken der Bremse bzw. das Betätigen des Bremskraftverstärkers bildende Hälfte des Bremspedals drehsicher mit einem zweiten, zum ersten Lagerkörper beabstandet angeordneten Lagerkörper verbunden ist, und wobei beide Lagerkörper vermittels eines formschlüssig in sie eingreifenden Vielkantelements drehsicher untereinander gekoppelt sowie jeweils für sich in dem jeweils den kleineren Innendurchmesser aufweisenden Teil der die in den beiden Lagerarmen des Lagerbocks angeordneten abgestuften Lagerungen bildenden Gleitlagerschalen aufgenommen sind. In Verbindung mit der zweiteiligen Ausbildung des Bremspedals ist bei dieser Verwirklichungsform der Erfindung hinsichtlich der Ausbildung des Kupplungspedals dann weiter vorgesehen, daß das Kupplungspedal vermittels eines sowohl den mit dem Bremspedal drehsicher verbundenen ersten als auch den mit dem zum Bremspedal beabstandet angeordneten Betätigungshebel für das Einrücken der Bremse verbundenen zweiten Lagerkörper umfassenden und zu der durch den Schraubenbolzen gebildeten Bremspedalwelle konzentrisch angeordneten Rohrs in dem jeweils den größeren Innendurchmesser aufweisenden Teil der die in den beiden Lagerarmen des Lagerbocks angeordneten abgestuften Lagerungen bildenden Gleitlagerschalen aufgenommen sind.

Für die Vereinfachung der Handhabbarkeit während der Montage bzw. Demontage der Pedalerie kann im weiteren vorgesehen sein, daß der Pedalhebel des Kupplungspedals mit dem zu der Bremspedalwelle konzentrisch angeordneten Rohr mittels Schweißung zu einer starren Einheit verbunden ist.

Hinsichtlich der Ausbildung einer Stecklagerung für eines der beiden Pedale der Pedalerie, vorzugsweise für das das einteilige Kupplungspedal bildende Pedal ist zweckmäßigerweise vorgesehen, daß die an den einander zugewandten Seiten der Lagerarme des Lagerbocks angeordneten und die der Lagerung des mit dem Kupplungspedal eine starre Einheit bildenden Rohrs zugeordneten, den größeren lichten Durchmesser aufweisende Abstufung der die Lagerungen bildenden ringförmigen Gleitlagerschalen aufnehmenden Lageraugenfortsätze eine radiale Öffnung aufweisen, die kleiner ist als der Außendurchmesser des mit dem Kupplungspedal verbundenen Rohrs. In Verbindung mit einer derartigen Ausbildung der Lageraugen empfiehlt es sich dann weiter, daß das mit dem Kupplungspedal zu einer starren Einheit verbundene Rohr im Bereich seiner beiden in die an den Lagerarmen des Lagerbockes ausgebildeten Lageraugenfortsätze eingreifenden Enden mit zwei einander gegenüberliegend angeordneten Außenumfangsabflachungen versehen ist, derart daß der Außendurchmesser des Rohrs über einen Teil dessen Außenumfangs hin gleich groß oder kleiner ist, als die lichte Weite der radialen Öffnungen in den Lageraugenfortsätzen der Lagerarme des Lagerbocks.

Entsprechend der Gestaltung der Lageraugen des Lagerbocks ist hinsichtlich der Ausbildung bzw. Ausgestaltung der die Lagerungen der Pedallagerung bildenden Gleitlager vorgesehen, daß auch die in den Lageraugen der Lagerarme des Lagerbocks angeordneten Gleitlagerschalen in ihrem den größeren lichten Durchmesser ausweisenden Bereich eine der lichten Weite der radialen Öffnung der Lageraugenfortsätze der Lagerarme des Lagerbocks entsprechende radiale Öffnung aufweisen.

Die Anordnung des das Kupplungspedal lagernden Rohrs innerhalb der Pedallagerung ist so getroffen, daß die beiden Abflachungen des Außendurchmessers des das Kupplungspedal lagernden Rohrs gegenüber den radialen Öffnungen in den Lageraugenfortsätzen der Lagerarme und den radialen Öffnungen in den Gleitlagerschalen in einem außerhalb des Betriebsschwenkwinkelbereichs der Kupplungspedallagerung liegenden Bereich angeordnet sind, derart, daß das Kupplungspedal nur in einer über seinen normalen Betriebsschwenkwinkelbereich hinaus verschwenkten Stellung aus seinen Lagerungen gelöst werden kann.

In weiterer zweckmäßiger Einzelausgestaltung kann hinsichtlich der Ausbildung einer Lagerachse für das zweiteilige Bremspedal vorgesehen sein, daß der das Bremspedal lagernde erste Lagerkörper und der zu diesem beabstandet angeordnete den Betätigungshebel lagernde zweite Lagerkörper vermittels eines durchgehenden Schraubenbolzens gegen die beiden Stirnseiten einer Abstandshülse verspannt sind, wobei der das Bremspedal lagernde erste Lagerkörper mit einem Innengewinde versehen ist und der Kopf des Schraubenbolzens die außenliegende Stirnseite des den Betätigungshebel lagernden Lagerkörpers übergreift. Bei einer derartigen Ausgestaltung sind die beiden Lagerkörper zweckmäßigerweise bis zu einem Teil ihrer Länge hin von der Abstandshülse übergriffen, derart daß die Abstandshülse gleichzeitig die die Lageraugen im Lagerbock durchsetzenden Längenabschnitte der beiden Lagerkörper übergreift und somit mit ihren Außenumfangsflächen die Lagerflächen einer Bremspedallagerwelle bildet.

Schließlich wird noch ein Merkmal der Erfindung darin gesehen, daß die in den Lagerarmen des Lagerbockes angeordneten Gleitlagerschalen jeweils durch ein Formteil aus einem selbstschmierenden Kunststoffmaterial gebildet und lediglich in ihrem dem größeren Durchmesser zugeordneten abgestuften Bereich mit einer radial gerichteten Öffnung versehen sind.

Die Erfindung ist in der nachfolgenden Beispielsbeschreibung anhand eines in der Zeichnung dargestellten Ausführungsbeispiels im Einzelnen beschrieben.
In der Zeichnung zeigt die
- Fig. 1: eine schaubildliche Darstellung einer zwei große Pedale umfassenden Pedalerie für ein Rechtslenkerfahrzeug.
- Fig. 2: eine Explosionsdarstellung der Lagerung für das Kupplungspedal.
- Fig. 3: einen Längsschnitt durch die Lagerung der beiden großen Pedale der Pedalerie nach Fig. 1.
- Fig. 4: einen Querschnitt durch die Lagerung der beiden großen Pedale bei in seiner Normalstellung befindlichem Kupplungspedal.
- Fig. 5: einen Querschnitt durch die Lagerung der beiden großen Pedale bei in seiner durchgetretenen Stellung befindlichem Kupplungspedal.

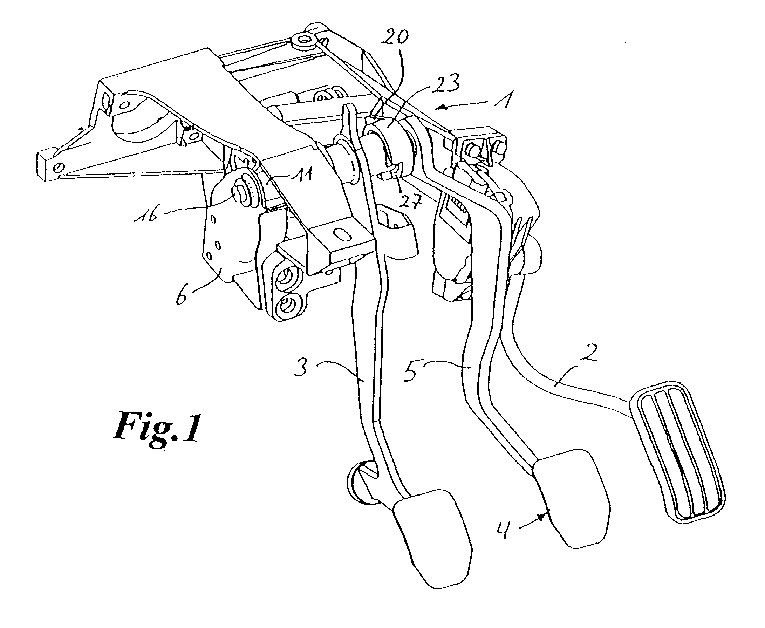

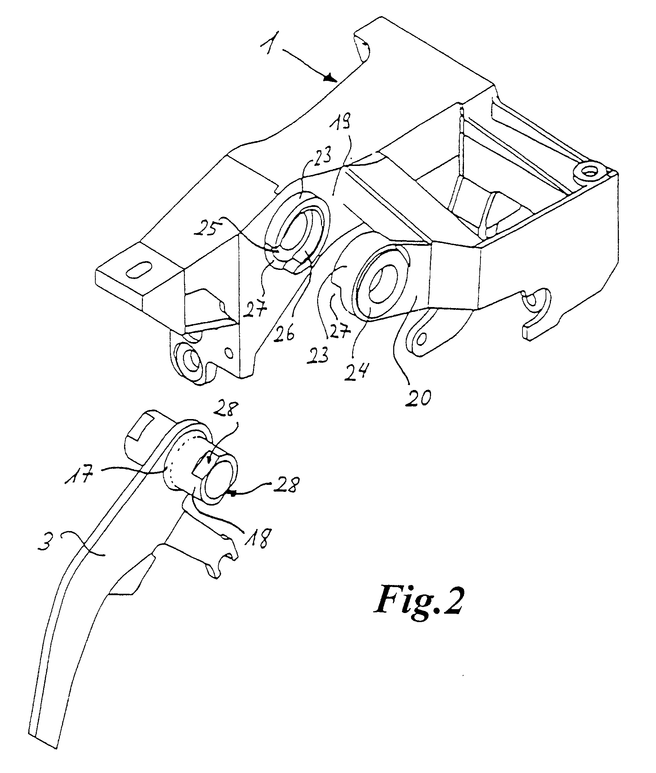

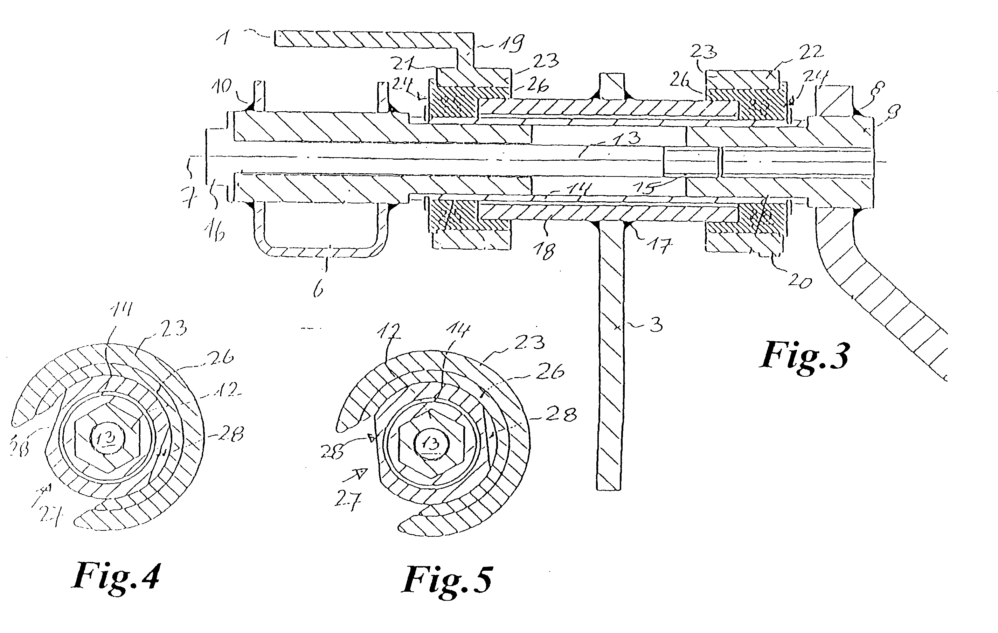

Die in ihrer Gesamtheit in der Fig. 1 gezeigte Pedalerie für ein Rechtslenkerfahrzeug besteht in der Hauptsache aus einem Lagerbock 1, einem Gaspedal 2, einem Kupplungspedal 3 und einem Bremspedal 4, wobei das Bremspedal 4 zweiteilig ausgebildet ist und einen Pedalarm 5 sowie einen mit einem in der Zeichnung nicht näher dargestellten Bremskraftverstärker zusammenwirkenden Betätigungshebel 6 umfaßt. Aus der Fig. 1 der Zeichnung ist weiterhin ersichtlich, daß wenigstens das Kupplungspedal 3 und die beiden Teile 5 und 6 des Bremspedales 4 um zueinander konzentrische Achsen 7 schwenkbar im Lagerbock 1 gelagert sind.
Die erste durch den Pedalhebel 5 gebildete Hälfte des Bremspedales 4 ist, wie insbesondere aus der Darstellung der Fig. 3 ersichtlich wird, mittels Schweißung 8 drehsicher mit einem ersten Lagerkörper 9 verbunden, während der die zweite Hälfte des Bremspedales 4 bildende, mit einem in der Zeichnung nicht näher dargestellten Bremskraftverstärker zusammenwirkende Betätigungshebel 6 gleichfalls mittels Schweißung 10 drehsicher mit einem zweiten, zum Lagerkörper 9 der ersten Bremspedalhälfte 5 axial beabstandet angeordneten Lagerkörper 11 verbunden ist. Die beiden Lagerkörper 9 und 11 der Bremspedallagerung sind durch formschlüssig in sie eingreifende Vielkantelemente 12 und einen durchgehenden Schraubenbolzen 13 drehsicher untereinander gekoppelt. In der gezeigten Ausführungsform sind der den Pedalarm 5 lagernde erste Lagerkörper 9 und der den zu diesem beabstandet angeordneten Betätigungshebel 6 lagernde zweite Lagerkörper 11 vermittels des durchgehenden Schraubenbolzens 13 gegen die beiden Stirnenden einer Abstandshülse 14 zu einer Lagerwelle verspannt. Der den Pedalarm 5 lagernde erste Lagerkörper 9 ist mit einem dem Schraubenbolzen 13 zugeorneten Innengewinde 15 versehen, während der Schraubenbolzen 13 andererseits mit seinem Kopf 16 die Stirnseite des den Betätigungshebel 6 lagernden Lagerkörpers 11 übergreift. Das Kupplungspedal 3 ist vermittels Schweißung 17 mit einem die durch die beiden Lagerkörper 9 und 11 sowie die Abstandshülse 14 gebildete Lagerwelle des Bremspedals 4 mit Spiel umgreifenden Rohr 18 zu einer starren Einheit verbunden. Die beiden Lagerarme 19 und 20 des Lagerbocks 1 sind jeweils mit einem Lagerauge 21 bzw. 22 ausgestattet, wobei die beiden Lageraugen 21 und 22 an den einander zugewandten Seiten der beiden Lagerarme 19 und 20 jeweils mit einem axial gerichteten Lageraugenfortsatz 23 ausgestattet sind. In die Lageraugen 21 und 22 sind untereinander gleich ausgebildete, die Lagerungen für die Pedale 3 und 4 bildende und abgestufte Innendurchmesser aufweisende ringförmige Gleitlagerschalen 24 eingesetzt und drehsicher festgelegt. Die Gleitlagerschalen weisen dabei im Bereich 25 der Lageraugen 21 und 22 der Lagerarme 19 und 20 des Lagerbocks 1 einen kleineren, dem Durchmesser der zu lagernden Bremswelle, im gezeigten Ausführungsbeispiel der Abstandshülse 14 entsprechenden Innendurchmesser auf, während sie in ihrem den Lageraugenfortsätzen 23 zugeordneten Bereich 26 einen größeren, dem Außendurchmesser des mit dem Kupplungspedal 3 zu einer starren Einheit verbundenen Rohres 18 entsprechenden Innendurchmesser aufweisen. Wie insbesondere aus den Figuren 4 und 5 ersichtlich ist, weisen die Lageraugenfortsätze 23 und die diesen zugeordneten, jeweils einen größeren Innendurchmesser aufweisenden Bereiche 26 der Gleitlagerschalen eine radial gerichteten Öffnung 27 auf, deren lichte Weite kleiner ist als der Außendurchmesser des mit dem Kupplungspedal 3 verbundenen Rohres 18. Das Rohr 18 ist im Bereich seiner beiden in die an den Lagerarmen 19 und 20 des Lagerbockes 1 ausgebildeten Lageraugenfortsätze 23 eingreifenden Enden mit zwei einander gegenüberliegend angeordneten Außenumfangsabflachungen 28 versehen, derart, daß das Rohr 18 im Bereich seiner Außenumfangsabflachungen 28 einen zu den radialen Öffnungen 27 der Lageraugenfortsätze 23 bzw. der Gleitlagerschalen höchstens gleich großen Durchmesser aufweist. In einer über seinen Betriebsschwenkwinkelbereich hinaus verschwenkten Stellung kann das Kupplungspedal daher in der in der Fig. 2 gezeigten Weise ohne Zuhilfenahme eines Werkzeugs aus seiner Lagerung im Lagerbock 1 herausgezogen werden bzw. umgekehrt bei der Montage in seine Lagerung im Lagerbock 1 eingesetzt werden.

## Patentansprüche

1. Aushängbare Pedallagerung, insbesondere für das der Kupplungsbetätigung zugeordnete Pedal (3) in einer wenigstens zwei hängend angeordnete Pedale (3, 4) umfassenden Pedalerie, bei der insbesondere ein Brems- (4) und ein Kupplungspedal (3) nebeneinanderliegend und unabhängig voneinander um zueinander konzentrische Achsen (7) schwenkbar in einem gemeinsamen, zwei Lagerarme (19, 20) aufweisenden Lagerbock (1) aufgehängt sind,
**dadurch gekennzeichnet,**
**daß** die Pedale (3, 4) über durch ringförmige Gleitlagerschalen gebildete, abgestufte Lagerungen gelagert sind, wobei die Lagerarme an ihren einander zugewandten Seiten mit seitlich auskragenden, die den größeren lichten Durchmesser aufweisende Abstufung der die Lagerungen bildenden ringförmigen Gleitlagerschalen (24) aufnehmenden Lageraugenfortsätzen (23) ausgestattet sind und wobei die Lagerung wenigstens eines der beiden Pedale (3, 4) als Stecklagerung ausgebildet ist.

2. Pedallagerung nach Anspruch 1, **dadurch gekennzeichnet, daß** das Bremspedal (4) zweiteilig ausgebildet ist, wobei eine erste, das Pedal tragende Hälfte (5) des Bremspedals (4) drehsicher mit einem ersten Lagerkörper (9) und eine zweite, den Betätigungshebel für das Einrücken der Bremse bzw. das Betätigen des Bremskraftverstärkers bildende Hälfte (6) des Bremspedals (4) drehsicher mit einem zweiten, zum ersten Lagerkörper (9) beabstandet angeordneten Lagerkörper (11) verbunden ist, und wobei beide Lagerkörper (9, 11) vermittels eines formschlüssig in sie eingreifenden Vielkantelements (12) drehsicher untereinander gekoppelt sowie jeweils für sich in dem jeweils den kleineren Innendurchmesser aufweisenden Bereich (25) der die in den beiden Lagerarmen (19, 20) des Lagerbocks (1) angeordneten abgestuften Lagerungen bildenden Gleitlagerschaien (24) aufgenommen sind.

3. Pedallagerung nach Anspruch 2, **dadurch gekennzeichnet, daß** das Kupplungspedal (3) vermittels eines sowohl den mit dem Bremspedal (4) drehsicher verbundenen ersten (9) als auch den mit dem zum Bremspedal (4) beabstandet angeordneten Betätigungshebel (6) für das Einrücken der Bremse verbundenen zweiten Lagerkörper (11) umfassenden und zu der Bremspedalwelle konzentrisch angeordneten Rohrs (18) in dem jeweils den größeren Innendurchmesser aufweisenden Bereich (26) der Gleitlagerschalen (24) aufgenommen ist.

4. Pedallagerung nach Anspruch 3, **dadurch gekennzeichnet, daß** der Pedalhebel des Kupplungspedals (3) mit dem zu der Bremspedalwelle konzentrisch angeordneten Rohr (18) mittels Schweißung (17) zu einer starren Einheit verbunden ist.

5. Pedallagerung nach Anspruch 3 oder 4, **dadurch gekennzeichnet, daß** die an den einander zugewandten Seiten der Lagerarme (19, 20) des Lagerbocks (1) angeordneten und die der Lagerung des mit dem Kupplungspedal (3) eine starre Einheit bildenden Rohrs (18) zugeordneten, den größeren lichten Durchmesser aufweisende Abstufung der die Lagerungen bildenden ringförmigen Gleitlagerschalen (24) aufnehmenden Lageraugenfortsätze (23) eine radiale Öffnung (27) aufweisen, die kleiner ist als der Außendurchmesser des mit dem Kupplungspedal (3) verbundenen Rohrs (18).

6. Pedallagerung nach einem der Ansprüche 3 bis 5, **dadurch gekennzeichnet, daß** das mit dem Kupplungspedal (3) zu einer starren Einheit verbundene Rohr (18) im Bereich seiner beiden in die an den Lagerarmen (19, 20) des Lagerbockes (1) ausgebildeten Lageraugenfortsätze (23) eingreifenden Enden mit zwei einander gegenüberliegend angeordneten Außenumfangsabflachungen (28) versehen ist, derart, daß der Außendurchmesser des Rohrs (18) über einen Teil dessen Außenumfangs hin gleich groß oder kleiner ist als die lichte Weite der radialen Öffnungen (27) in den Lageraugenfortsätzen (23) der Lagerarme (19, 20) des Lagerbocks (1).

7. Pedallagerung nach Anspruch 5 oder 6, **dadurch gekennzeichnet, daß** die in den Lageraugen (21, 22) der Lagerarme (19, 20) des Lagerbocks (1) angeordneten Gleitlagerschalen (24) in ihrem den größeren lichten Durchmesser aufweisenden Bereich (26) eine der lichten Weite der radialen Öffnung (27) der Lageraugenfortsätze (23) der Lagerarme (19, 20) des Lagerbocks (1) entsprechende radiale Öffnung (27) aufweisen.

8. Pedallagerung nach Anspruch 7, **dadurch gekennzeichnet, daß** die beiden Abflachungen (28) des Außendurchmessers des das Kupplungspedal (3) lagernden Rohrs (18) gegenüber den radialen Öffnungen (27) in den Lageraugenfortsätzen (23) der Lagerarme (19, 20) und den radialen Öffnungen (27) in den Gleitlagerschalen (24) in einem außerhalb des Betriebsschwenkwinkelbereichs der Kupplungspedallagerung liegenden Bereich angeordnet sind.

9. Pedallagerung nach einem der Ansprüche 2 bis 8, **dadurch gekennzeichnet, daß** der das Bremspedal (4) lagernde erste Lagerkörper (9) und der zu diesem beabstandet angeordnete den Betätigungshebel (6) lagernde zweite Lagerkörper (11) mittels eines durchgehenden Schraubenbolzens (13) gegen die beiden Stirnseiten einer Abstandshülse (14) verspannt sind, wobei der erste Lagerkörper (9) mit einem Innengewinde versehen ist und der Kopf (16) des Schraubenbolzens (13) die außenliegende Stirnseite des zweiten Lagerkörpers (11) übergreift.

10. Pedallagerung nach einem der Ansprüche 1 bis 9, **dadurch gekennzeichnet, daß** die in den Lagerarmen (19, 20) des Lagerbocks (1) angeordneten Gleitlagerschalen (24) jeweils durch ein Formteil aus einem selbstschmierenden Kunststoffmaterial gebildet sind.

## Claims

1. Disengageable pedal support, in particular for the clutch-actuation pedal (3) in a foot-control unit comprising at least two suspended pedals (3, 4), in the case of which in particular a brake pedal (4) and a clutch pedal (3) are suspended in a common bearing bracket (1), said bearing bracket (1) having two bearing arms (19, 20), one beside the other and such that they can be pivoted independently from each other about concentric axes,
**characterized in that** the pedals (3, 4) are supported via graduated supports formed by annular plain-bearing shells, it being the case that the bearing arms are provided, on their mutually facing sides, with laterally projecting bearing-eyelet continuations (23) which accommodate the graduation, with the larger clear diameter, of the support-forming annular plane-bearing shells (24), and it also being the case that the support of at least one of the two pedals (3, 4) is designed as a plug-in support.

2. Pedal support according to Claim 1, **characterized in that** the brake pedal (4) is of two-part design, it being the case that a first, pedal-bearing half (5) of the brake pedal (4) is connected in a rotationally secure manner to a first bearing body (9) and a second half (6) of the brake pedal (4), said half (6) forming the actuator lever for engaging the brake and/or actuating the brake booster, is connected in a rotationally secure manner to a second bearing body (11), which is spaced apart from the first bearing body (9), and it being the case that the two bearing bodies (9, 11) are coupled in a rotationally secure manner to one another by means of a polyhedral element (12) engaging in them with a form fit, and are each accommodated in the respectively smaller-internal-diameter part (25) of the plain-bearing shells (24), which are arranged in the two bearing arms (19, 20) of the bearing bracket (1) and form graduated supports.

3. Pedal support according to Claim 2, **characterized in that**, by means of a tube (18) which encloses both the first bearing body (9), connected in a rotationally secure manner to the brake pedal (4), and the second bearing body (11), connected to the actuating lever (6) for engaging the brake, said actuating lever (6) being spaced apart from the brake pedal (4), and which is arranged concentrically with the brake-pedal shaft, the clutch pedal is accommodated in the respectively larger-internal-diameter part (26) of the plain-bearing shells (24).

4. Pedal support according to Claim 3, **characterized in that** the pedal lever of the clutch pedal (3) is connected by means of welding (17) to the tube (18) to form a rigid unit.

5. Pedal support according to Claims 3 or 4, **characterized in that** the bearing-eyelet continuations (23), which are arranged on the mutually facing sides of the bearing arms (19, 20) of the bearing bracket (1) and accommodate the graduation of the support-forming annular plain-bearing shells (24), said graduation having the larger clear diameter and being assigned to the support of the tube (18), which forms a rigid unit with the clutch pedal (3), have a radial opening (27) which is smaller than the external diameter of the tube (18), which is connected to the clutch pedal (3).

6. Pedal support according to one of Claims 3 to 5, **characterized in that**, in the region of its two ends, which engage in the bearing-eyelet continuations (23), which are formed on the bearing arms (19, 20) of the bearing bracket (1), the tube (18), which is connected to the clutch pedal (3) to form a rigid unit, is provided with two mutually opposite outer-circumference flattened formations (28) such that the external diameter of the tube (18), over part of the outer circumference of the latter, is equal to or smaller than the clear width of the radial openings (27) in the bearing-eyelet continuations (23) of the bearing arms (19, 20) of the bearing bracket (1).

7. Pedal support according to Claims 5 or 6, **characterized in that**, in their region (26) having the larger clear diameter, the plain-bearing shells (24), which are arranged in the bearing eyelets (21, 22) of the bearing arms (19, 20) of the bearing bracket (1), have a radial opening (27) which corresponds to the clear width of the radial opening (27) of the bearing-eyelet continuations (23) of the bearing arms (19, 20) of the bearing bracket (1).

8. Pedal support according to Claim 7, **characterized in that**, in relation to the radial openings (27) in the bearing-eyelet continuations (23) of the bearing arms (19, 20) and the radial openings (27) in the plain-bearing shells (24), the two flattened formations (28) of the external diameter of the clutch-pedal-supporting tube (18) are arranged in a range which is located outside the normal-operation pivoting-angle range of the clutch-pedal support.

9. Pedal support according to one of Claims 2 to 8, **characterized in that** the first bearing body (9), which supports the brake pedal (4), and the second bearing body (11), which is spaced apart from the first bearing body (9) and supports the actuating lever (6), are braced against the two end sides of a spacer sleeve (14) by means of a screw-bolt (13) passing through them, it being the case that the first bearing body (9) is provided with an internal thread and the head (16) of the screw-bolt (13) engages over the outer end side of the second bearing body (11).

10. Pedal support according to one of Claims 1 to 9, **characterized in that** the plain-bearing shells (24), which are arranged in the bearing arms (19, 29) of the bearing bracket (1), are each formed by a moulding made of a self-lubricating plastic material.

## Revendications

1. Support pour pédales suspendues, en particulier pour la pédale (**3**) associée à la commande d'embrayage dans un pédalier comprenant au moins deux pédales (**3, 4**) montées suspendues, dans lequel, en particulier, une pédale de frein (**4**) et une pédale d'embrayage (**3**) sont suspendues l'une à côté de l'autre et de manière pivotante indépendamment l'une de l'autre autour d'axes (**7**) concentriques dans un étrier support (**1**) commun présentant deux bras de soutien (**19, 20**), **caractérisé en ce que** les pédales (**3, 4**) sont montées sur des supports à gradins formés par des coques annulaires à palier glissant, les bras de soutien étant munis, sur leurs faces en vis-à-vis, de prolongements d'oeillets de palier (**23**) en saillie radiale recevant les coques annulaires à palier glissant (**24**) qui forment les supports, et le support d'au moins l'une des deux pédales (**3, 4**) étant conformé en support à fiche.

2. Support pour pédales selon la revendication 1, **caractérisé en ce que** la pédale de frein (**4**) est conformée en deux parties, une première moitié (**5**) de la pédale de frein (**4**) formant la pédale étant reliée de manière solidaire en rotation à un premier corps de palier (**9**) et une deuxième moitié (**6**) de la pédale de frein (**4**) formant le levier de commande pour l'engagement du frein ou l'actionnement de l'amplificateur de force de freinage étant reliée de manière solidaire en rotation à un deuxième corps de palier (**11**), placé à distance du premier corps de palier (**9**), et les deux corps de palier (**9, 11**) étant couplés l'un à l'autre de manière solidaire en rotation au moyen d'un élément polygonal (**12**) s'enfonçant en eux par engagement positif et étant logés chacun séparément dans la zone (**25**) respective de plus petit diamètre intérieur des coques à palier glissant (**24**) formant les supports à gradins placés dans les deux bras de soutien (**19**, **20**) de l'étrier support (**1**).

3. Support pour pédales selon la revendication 2, **caractérisé en ce que** la pédale d'embrayage (**3**) est logée dans la zone respective (**26**) des coques à palier glissant (**24**) présentant le plus grand diamètre au moyen d'un tube (**18**), qui comprend à la fois le premier corps de palier (**9**) relié de manière solidaire en rotation à la pédale de frein (**4**) et le deuxième corps de palier (**11**) relié au levier (**6**) d'actionnement du frein placé à distance de la pédale de frein (**4**), et qui est placé de manière concentrique à l'arbre de la pédale de frein.

4. Support pour pédales selon la revendication 3, **caractérisé en ce que** le levier de pédale de la pédale d'embrayage (**3**) est relié par soudage (**17**) au tube (**18**) placé concentrique à l'arbre de la pédale de frein pour former une unité rigide.

5. Support pour pédales selon la revendication 3 ou 4, **caractérisé en ce que** les prolongements d'oeillets de palier (**23**), placés sur les côtés en vis-à-vis des bras de soutien (**19**, **20**) de l'étrier support (**1**) et recevant le gradin des coques annulaires à palier glissant (**24**) formant les supports présentant le plus grand diamètre libre et associé au support du tube (**18**) formant, avec la pédale d'embrayage (**3**), une unité rigide, présentent une ouverture radiale (**27**) qui est plus petite que le diamètre extérieur du tube (**18**) relié à la pédale d'embrayage (**3**).

6. Support pour pédales selon l'une des revendications 3 à 5, **caractérisé en ce que** le tube (**18**) relié à la pédale d'embrayage (**3**) en une unité rigide est muni, au niveau de ses deux extrémités s'engageant dans les prolongements d'oeillets de palier (**23**) formés sur les bras de soutien (**19, 20**) de l'étrier support (**1**), de deux méplats périphériques extérieurs (**28**) mutuellement opposés, de telle manière que le diamètre extérieur du tube (**18**) est, sur une partie de circonférence extérieure, aussi grand ou plus petit que l'ouverture libre des ouvertures radiales (**27**) présentes dans les prolongements d'oeillets de palier (**23**) des bras de soutien (**19, 20**) de l'étrier support (**1**).

7. Support pour pédales selon la revendication 5 ou 6, **caractérisé en ce que** les coques à palier glissant (**24**) placées dans les oeillets de palier (**21, 22**) des bras de soutien (**19, 20**) de l'étrier support (**1**) présentent, dans leur zone (**26**) présentant le plus grand diamètre libre, une ouverture radiale (**27**) correspondant à la largeur libre de l'ouverture radiale (**27**) des prolongements d'oeillets de palier (**23**) des bras de soutien (**19**, **20**) de l'étrier support (**1**).

8. Support pour pédales selon la revendication 7, **caractérisé en ce que** les méplats (**28**) du diamètre extérieur du tube (**18**) soutenant la pédale d'embrayage (**3**) sont placés en l'ace des ouvertures radiales (**27**) présentes dans les prolongements d'oeillets de palier (**23**) des bras de soutien (**19**, **20**) et des ouvertures radiales (**27**) présentes dans les coques à palier glissant (**24**), dans une zone située en dehors de la plage d'angles de rotation en service du support de pédale d'embrayage.

9. Support pour pédales selon l'une des revendications 2 à 8, **caractérisé en ce que** le premier corps de palier (**9**) soutenant la pédale de frein (**4**) et le deuxième corps de palier (**11**) soutenant le levier d'actionnement (**6**) et situé à distance du précédent sont serrés contre les deux faces frontales d'une douille d'espacement (**14**) au moyen d'une tige filetée continue (**13**), le premier corps de palier (**9**) étant muni d'un filetage intérieur et la tête (**16**) de la tige filetée (**13**) saisissant, par le dessus, la face frontale extérieure du deuxième corps de palier (**11**).

10. Support pour pédales selon l'une des revendications 1 à 9, **caractérisé en ce que** les coques à palier glissant (**24**) placées dans les bras de soutien (**19**, **20**) de l'étrier support (**1**) sont formées à chaque fois par une pièce moulée dans un matériau synthétique autolubrifiant.
